# EUROPEAN PATENT APPLICATION

(11) **EP 1 681 338 A1**
(43) Date of publication of application: **19.07.2006**
(21) Application number: 04788296.4
(22) Date of filing: 29.09.2004
(51) Int. Cl.: C10L 1/02, C10L 1/18

(54) **MODIFIER FOR BIODIESEL FUEL, FUEL, METHODS RELATING TO THOSE**

(30) Priority: 02.10.2003 JP 2003344051
(71) Applicant: Sun Care Fuels Corporation, Tsukuba-shi, Ibaraki 305-0047 (JP)
(72) Inventor: MATSUMURA, Masatoshi, 3002642 (JP)
(74) Representative: TBK-Patent
(86) International application number: PCT/JP2004/014230
(87) International publication number: WO 2005/033252

(57) **Abstract**

[Problem] To produce a biodiesel fuel modifying agent of biodiesel fuel (BDF) such as methyl-esterified fuel. [Means for Resolution] A biodiesel fuel modifying agent **characterized by** ozone treatment of vegetable oil such as sunflower oil, rapeseed oil and soybean oil is provided. By adding this biodiesel fuel modifying agent to biodiesel fuel (BDF), the pour point of the biodiesel fuel can be decreased significantly. Therefore, the present invention makes the biodiesel fuel amenable for use even in cold regions etc. In addition, by adding the biodiesel fuel modifying agent according to the present invention to the biodiesel fuel, engine performance of a diesel engine, particularly, torque and horsepower at revolutions of low speed can be improved.

## Description

### [Technical Field]

The present invention relates to a biodiesel fuel modifying agent added to biodiesel fuel (BDF), fuel to which the modifying agent is added, and a method related thereto. More specifically, the invention relates to a biodiesel fuel modifying agent obtained by ozone treatment of vegetable oil, particularly, a biodiesel fuel modifying agent for decreasing a pour point of biodiesel fuel and improving torque and horsepower of a diesel engine, fuel to which the modifying agent is added, and a method related thereto.

### [Background Art]

In recent years, from the viewpoint of air pollution prevention etc., biodiesel fuel (BDF) has received attention as fuel for diesel engine in which occurrence of SOx is insignificant. The biodiesel fuel is a liquid fuel produced from vegetable oil and the vegetable oil used as raw material hardly contains sulfur, so that occurrence of SOx can be suppressed.

Also, since vegetable oil used as raw material for biodiesel fuel is produced from vegetable crops, self-sufficiency and resource recycling can be achieved. Also, vegetable crops have high carbon dioxide absorbing ability, therefore promotion of utilization of the biodiesel fuel is also useful from the viewpoint of prevention of global warming. With this premise, biodiesel fuel becomes popular and widespread among Western countries.

Fuel obtained by methyl esterification reaction of vegetable oil such as sunflower oil or soybean oil has recently been tapped for the production of biodiesel fuel. This methyl-esterified fuel has a disadvantage in that the pour point is high as compared with light oil (which is petroleum-based fuel) for diesel engine. While the pour point of commercially available light oil is -15 °C , the pour point of the methyl-esterified fuel is about -2°C. Because of that, the methyl-esterified fuel could not be used under low temperature conditions and therefore not suitable for use in cold regions etc.

Thus, in many countries around the West, mixed fuel in which biodiesel fuel is blended with petroleum-based light oil is commonly used. For example, fuel in which 20% biodiesel fuel is mixed with petroleum-based light oil is called "B20".

Incidentally, the present status of biodiesel fuel in other countries of the world are described in Non-patent Reference 1 to Non-patent Reference 4.
[Non-patent Reference 1]
   http://www.meti.go.jp/report/downloadfiles/g30625d50j.pdf
[Non-patent Reference 2]
   NEDO Overseas Report, No.913, 2003.8.20, Renewable Energy Trend of England-2002,
   (http://www.nedo.go.jp/kankobutsu/report/913/913-04.pdf)
[Non-patent Reference 3]
   X. Lang, A.K. Dalai, N.N Bakhshi, M.J. Reaney and P. B. Hertz "Preparation and Characterization of Bio-Diesels from Various Bio-Oils", Bioresource Technology, 80, 53-62 (2001)
[Non-patent Reference 4]
   S. Sinha and N.C. Misra, "Diesel Fuel Alternative from Vegetable Oils", Chemical Engineering World, October, 1997, http;//www.exicom.org/cew/oct9/sinna.ntm

### [Disclosure of the Invention]

### [Problems that the Invention is to Solve]

However, in the conventional technique, there are a number of problems that need to be addressed.

Use of 100% biodiesel fuel rather than fuel mixed into petroleum-based light oil is essentially ideal for reduction in environmental problems such as air pollution or global warming. However, under the present circumstances, the pour point is high, such that 100% biodiesel fuel cannot be used under conditions of low temperature in cold regions etc.

Also in mixed fuel such as B20 which is currently being used, petroleum-based light oil is merely mixed with the biodisel fuel, and the problem of high pour point of biodiesel fuel is not completely solved. Also, there was a problem that the pour point increases as a mixture ratio of the biodiesel fuel is increased.

In cold regions etc., pour point depressants such as EVA (ethylene-vinyl acetate copolymer) are currently used for mixed fuel such as B20, but these pour point depressants are used for petroleum-based light oil and have no effect on biodiesel fuel. Therefore, there was a problem on the effect being limited when used for mixed fuel such as B20 and also pour point depression action on 100% biodiesel fuel has no significant effect.

Thus, the principal objective of the present invention is to provide an additive for decreasing the pour point of biodiesel fuel (BDF) such as methyl-esterified fuel.

### [Means for Solving the Problems]

In order to solve the technical problems described above, the present invention provides a biodiesel fuel modifying agent obtained by ozone treatment of vegetable oil. The biodiesel fuel modifying agent according to the present invention can be produced by ozone treatment of vegetable oil such as sunflower oil, rapeseed oil and soybean oil, for example, by a method of aeration of ozone-oxygen mixed gas.

Methyl-esterified fuel which is biodiesel fuel (BDF) is becoming more widespread currently as fuel in which methyl esterification of vegetable oil such as sunflower oil, rapeseed oil and soybean oil is conducted and the vegetable oil is purified. By adding the biodiesel fuel modifying agent according to the present invention to this methyl-esterified fuel, a pour point of the methyl-esterified fuel can be decreased significantly. Therefore, by adding the biodiesel fuel modifying agent according to the present invention, for example, even in low temperature regions such as cold regions, the biodiesel can be used.

In addition, it was newly found from the results of keen studies of the inventor of the present application that the biodiesel fuel modifying agent according to the present invention had action of improving torque and horsepower of a diesel engine. That is, by adding the biodiesel fuel modifying agent according to the present invention to the biodiesel fuel, engine performance of the diesel engine, particularly, torque and horsepower at revolutions of low speed can be improved, so that the biodiesel in large trucks etc. can be used.

Pour point depression action of the biodiesel fuel modifying agent is related to the number of unsaturated double bonds present in vegetable oil used as raw material for the synthesis of this biodiesel fuel modifying agent. The vegetable oil such as sunflower oil, linseed oil and rapeseed oil with a large number of unsaturated double bonds is particularly effective as raw material for the production of the biodiesel fuel modifying agent.

For example, a biodiesel fuel modifying agent ("ozone-treated sunflower oil") produced by ozone treatment of sunflower oil can decrease the pour point of methyl-esterified fuel produced from sunflower oil and rapeseed oil to about -30°C. This is a value lower than the pour point (-15°C) of petroleum-based light oil.

In the present invention, degree of oznide of the unsaturated double bonds of triglyceride probably plays an important role in the action mechanism. In other words, it is likely that the long hydrocarbon chains of the biodiesel fuel modifying agent according to the present invention acts on the saturated fatty acids present in the methyl- esterified fuel in the solid phase while the polar groups of the methyl-esterified fuel prevents agglomeration by modifying the growth and size of the crystals. Hence, treatment of the methyl-esterified fuel with the pour point depressant minimizes solidification and decreases the pour point of the biodiesel fuel.

Thus, the present invention also provides a biodiesel fuel modifying agent characterized in that an unsaturated double bond region of triglyceride forms ozonide. Since pour point depression action of biodiesel fuel probably takes place based on the action mechanism described above, a biodiesel fuel modifying agent for decreasing the pour point of the biodiesel fuel can also be produced by ozone treatment of triglyceride with many unsaturated double bond regions synthesized artificially.

Incidentally, additional experiment (not described in the present specification) of the inventor of the present application revealed that pour point depression action was not obtained in the case of adding a substance obtained by ozone treatment of the methyl-esterified fuel itself. This reveals that a structure (comb-like structure) of the triglyceride of the biodiesel fuel modifying agent according to the present invention plays an important role in the pour point depression action and also the pour point depression action is not obtained even in the case of ozone treatment of the methyl-esterified fuel itself in which the structure of triglyceride is destroyed by methyl esterification reaction.

Moreover, a good result can be obtained generally by making a kind of vegetable oil used as rawmaterial of methyl-esterified fuel equal to a kind of vegetable oil (triglyceride) with ozone treatment as a biodiesel fuel modifying agent. This is presumably because the action by ozonide tends to take place more in the case that methyl ester of the methyl-esterified fuel is similar in structure to the fatty acids of the pour point depressant.

However, a biodiesel fuel modifying agent obtained by ozone treatment of sunflower oil had sufficient pour point depression action on all the methyl-esterified fuels. Also, a biodiesel fuel modifying agent ("ozone-treated rapeseed oil") obtained by ozone treatment of rapeseed oil had sufficient pour point depression action on many methyl-esterified fuels. This is probably because the ozone-treated sunflower oil and the ozone-treated rapeseed oil have a large number of unsaturated double bonds and have a large number of ozonides in the structure.

Subsequently, the present invention provides biodiesel fuel to which a biodiesel fuel modifying agent according to the present invention is added. As described above, by adding the biodiesel fuel modifying agent according to the present invention to the biodiesel fuel, the pour point of the biodiesel fuel can be decreased lower than the pour point (-15°C) of common petroleum-based light oil, so that 100% biodiesel fuel which is not mixed with petroleum-based light oil can also be used.

Incidentally, by adding the biodiesel fuel modifying agent according to the present invention, a flash point as well as the pour point of biodiesel fuel decreased (see Example 1, Table 2), so that another problem that "biodiesel fuel has a too high flash point" in the case of using 100% biodiesel fuel can also be solved at the same time.

The biodiesel fuel modifying agent according to the present invention is effective not only for 100% biodiesel fuel but also mixed fuel such as B20 in which biodiesel fuel is mixed with petroleum-based light oil. Thus, the present invention provides fuel for diesel engine containing at least petroleum-based light oil and/or biodiesel fuel and a biodiesel fuel modifying agent according to the present invention as its composition.

As described above, a conventional biodiesel fuel modifying agent acted on petroleum-based light oil and hardly acted on biodiesel fuel. Thus, by adding a biodiesel fuel modifying agent according to the present invention to mixed fuel singly or together with a pour point depressant for petroleum-based light oil, stable pour point depression action can be produced.

Incidentally, additional experiment (not described in the present specification) by the inventor of the present application revealed that when the amount of addition was reduced to 1% or less, the action for decreasing the pour point was achieved, however, the depressant action decreased. Therefore, it is desirable to add 1% by weight or more of a pour point depressant according to the present invention to biodiesel fuel.

### [Effect of the Invention]

Effects taken by the present invention are as follows.

The pour point of biodiesel fuel can be decreased by adding a biodiesel fuel modifying agent according to the present invention to the biodiesel fuel.

The flash point of biodiesel fuel can also be decreased by adding a biodiesel fuel modifying agent to the biodiesel fuel according to the present invention.

The biodiesel fuel modifying agent according to the present invention itself does not contain sulfur and also self-sufficiency and resource recycling can be achieved, so that environmental problems such as air pollution and global warming are alleviated. Also, biodiesel fuel is a fuel which is environment-friendly. Therefore, fuel for diesel engine in which environmental problems are minimized can be used in wide regions such as cold regions provided that a pour point depressant is added to the biodiesel fuel according to the present invention.

In addition, torque and horsepower of a diesel engine can be improved by adding the biodiesel fuel modifying agent according to the present invention to the biodiesel fuel.

### [Example 1]

Example 1 is an experiment in examination of pour point depression in the case of adding ozone-treated sunflower oil to methyl-esterified fuel derived from various vegetable oils. The procedure is as follows.

The methyl-esterified fuel was prepared by performing methyl esterification of each vegetable oil of sunflower oil, rapeseedoil, soybean oil, palm oil, respectively. Thismethyl esterification reaction was performed by adding 60 g of CH₃OH and 1. 5 g of NaOCH₃ to 300 g each of the vegetable oil and refluxing for two hours at 60 to 70°C. Then, after the completion of the methyl esterification reaction, the reaction liquid was allowed to stand overnight and by decantation, a methyl ester layer was separated from a glycerol layer and the methyl ester layer was recovered. This methyl ester layer was purified by centrifugation, removal of extra methanol by distillation under normal atmospheric pressure, washing several times with water and dehydration using anhydrous Na₂SO₄. By the above steps, the methyl-esterified fuel derived from each the vegetable oil was prepared.

Next, "ozone-treated sunflower oil" was prepared as a biodiesel fuel modifying agent. The ozone-treated sunflower oil was prepared by putting 50 ml of sunflower oil into a small bubbling column and passing ozone-oxygen mixed gas with an ozone concentration of 40 g-O₃/m³ to this bubbling column for a predetermined time at a volume rate of 0.5L/min. Incidentally, the ozone-treated sunflower oils with two levels of ozone concentrations of 0.183 and 0.206 g-O₃/ml-oil were prepared by measuring ozone concentrations in the inlet and outlet of the bubbling column by an ozone concentration meter.

A 1. 0% by weight and 1.5% by weight of the ozone-treated sunflower oil with 0.183 or 0.206 g-O₃/ml-oil were added to the methyl-esterified fuel and were mixed well in a water bath at 40 °C. Then, the pour point of the methyl-esterified fuel derived from each of the vegetable oil (to which the ozone-treated sunflower oil was added), was measured. The result is shown in Table 1.

[Table 1]

As shown in Table 1, when the ozone-treated sunflower oil was added to the methyl-esterified fuel produced from sunflower oil, a temperature of the pour point decreased by 20°C or more. Therefore, the present experiment showed that a biodiesel fuel modifying agent according to the present invention was effective as a pour point depressant of the methyl-esterified fuel.

In the case of adding 1.0% by weight of ozone-treated sunflower oil and compared with the case of adding 1.5% by weight of ozone-treated sunflower oil, there was no big difference between the case of 0.183 g-O₃/ml-oil and the case of 0.206 g-O₃/ml-oil in terms of other fuel properties such as density, kinematic viscosity, dynamic viscosity and cloud point. On the other hand, comparison between 0.183 g-03/ml-oil and 0.206 g-O₃/ml-oil of the ozone-treated sunflower oils showed that pour point depression action of 0.206 g-O₃/ml-oil tended to become slightly larger than that of 0.183 g-O₃/ml-oil. This result shows that degree of convertion ozonide of unsaturated fatty acid becomes a factor that is more important than the amount of addition of the pour point depressant action of the ozone-treated sunflower oil.

Also, as shown in Table 1, the present experiment revealed that the ozone-treated sunflower oil not only effectively decreased the pour point of the methyl esterified fuel produced from sunflower oil and but also exhibited a pour point depression action on methyl esterified fuel produced from other vegetable oils. It is shown that the ozone-treated sunflower oil according to the present invention has a remarkable action for decreasing the pour point of methyl-esterified fuel produced from sunflower oil and is extremely effective as an additive to the methyl-esterified fuel derived from rapeseed oil. Certain pour point depression action on methyl-esterified fuel produced from soybean oil was also exhibited. When a pour point of methyl-esterified fuel decreases to about -10°C, this fuel can be used even in cold regions etc., so that it was also shown that the biodiesel fuel modifying agent according to the present invention was also effective for the methyl-esterified fuel derived from soybean oil.

On the other hand, the ozone-treated sunflower oil did not show effect on methyl-esterified fuel produced from palm oil. This is probably because of the fact that the palm oil has a remarkably high content of saturated fatty acid ester as compared with the other vegetable oils.

Incidentally, it was revealed that in methyl-esterified fuel to which 1% by weight of ozone-treated sunflower oil was added, changes in density, viscosity, cloud point, etc. were not significant as compared with those of additive-free fuel but the flash point as well as the pour point decreased by about 23°C on the average (see Table 2) . This decrease is probably caused by the flammability of ozonide. Therefore, it was revealed that a biodiesel fuel modifying agent according to the present invention decreased the flash point as well as the pour point of biodiesel fuel. Since biodiesel fuels have problems on fuel characteristics such as high flash point as well as high pour point, it was shown that the present invention was also effective in achieving solutions and strategies to minimize these problems on fuel characteristics. Incidentally, all the methyl-esterified fuels to which the biodiesel fuel modifying agent according to the present invention is added satisfy the standards of the flash point of biodiesel in the Western Region.

[Table 2]

### [Example 2]

Example 2 is an experiment showing whether or not a biodiesel fuel modifying agent according to the present invention prepared by ozone treatment of each vegetable oil of sunflower oil, rapeseed oil, soybean oil and palm oil has an effect of decreasing the pour point of methyl-esterified fuel produced from each the vegetable oil of sunflower oil, rapeseed oil, soybean oil and palm oil.

Methyl-esterified fuel produced from each vegetable oil of sunflower oil, rapeseed oil, soybean oil and palm oil was produced in a manner similar to Example 1. Also, a biodiesel fuel modifying agent according to the present invention prepared by ozone treatment was produced by using a manner similar to the ozone-treated sunflower oil of Example 1 using each vegetable oil of sunflower oil, rapeseed oil, soybean oil and palm oil as raw material. Incidentally, the amounts of absorbed ozone of each of the ozone-treated vegetable oil were 0.168 g-O₃/ml-oil for ozone-treated rapeseed oil, 0.179 g-O₃/ml-oil for ozone-treated soybean oil and 0.063 g-O₃/ml-oil for palm oil, respectively. The values are probably correlated with the number of unsaturated double bonds in their triglyceride structures. Also, the ozone-treated sunflower oil of 0.206 g-O₃/ml-oil used in Example 1 was used in ozone treatment of sunflower oil.

Then, each of the ozone-treated vegetable oil was added to the methyl-esterified fuel produced from each of the vegetable oil and the pour points were measured. The results are shown in Table 3.

### [Table 3]

As shown in Table 3, the biodiesel fuel modifying agents obtained by ozone treatment of sunflower oil, rapeseed oil and soybean oil effectively decrease the pour points of methyl-esterified fuels produced from sunflower oil, rapeseed oil and soybean oil, respectively and are very effective as pour point depressants according to the present invention. Particularly, ozone-treated sunflower oil decreases the pour points of the methyl-esterified fuels produced from sunflower oil and rapeseed oil to about -30°C and also has the effect equal to the other ozone-treated vegetable oils with respect to the methyl-esterified fuel produced from soybean oil, so that the ozone-treated sunflower oil is effective against the whole methyl-esterified fuels as a pour point depressant according to the present invention.

Also, it was shown that ozone-treated palm oil also had certain effect on the methyl-esterified fuels produced from sunflower oil, rapeseed oil and soybean oil. On the other hand, in methyl-esterified fuel produced from palm oil, pour point depression action by ozone-treated palm oil was not found.

Moreover, in the present experiment, a tendency to have the most pour point depression action was generally found in the case that a biodiesel fuel modifying agent obtained by ozone treatment of the same vegetable oil was added to methyl-esterified fuel produced from the same vegetable oil.

### [Example 3]

Example 3 is an experiment showing that a biodiesel fuel modifying agent according to the present invention has action of improving torque and horsepower of a diesel engine. The experiment procedure is as follows.

First, a diesel vehicle (piston displacement of 3.5 L and the trade name of "LANDCRUISER PZJ70" manufactured by Toyota Motor Corp. and "LANDCRUISER" is a registered trademark and hereinafter the same) was installed in a chassis dynamo tester (the trade name of "Dynamaster 6000S" manufactured by Sakura Dyno Systems Co., Ltd. and hereinafter the same). Incidentally, the chassis dynamo tester is an automatic measuring device of horsepower and torque.

Also, three kinds of petroleum-based light oil (commercially available light oil manufactured by Idemitsu Kosan Co., Ltd. and hereinafter the same), self-made biodiesel fuel, and fuel in which a biodiesel fuel modifying agent according to the present invention is added to the biodiesel fuel were prepared. A biodiesel fuel produced from sunflower oil was produced by using sunflower oil as raw material and conducting methyl-esterification treatment by a method similar to that of the Example 1. A biodiesel fuel modifying agent was also produced by using sunflower oil as raw material and conducting ozone treatment by a method similar to that of the

### Example 1.

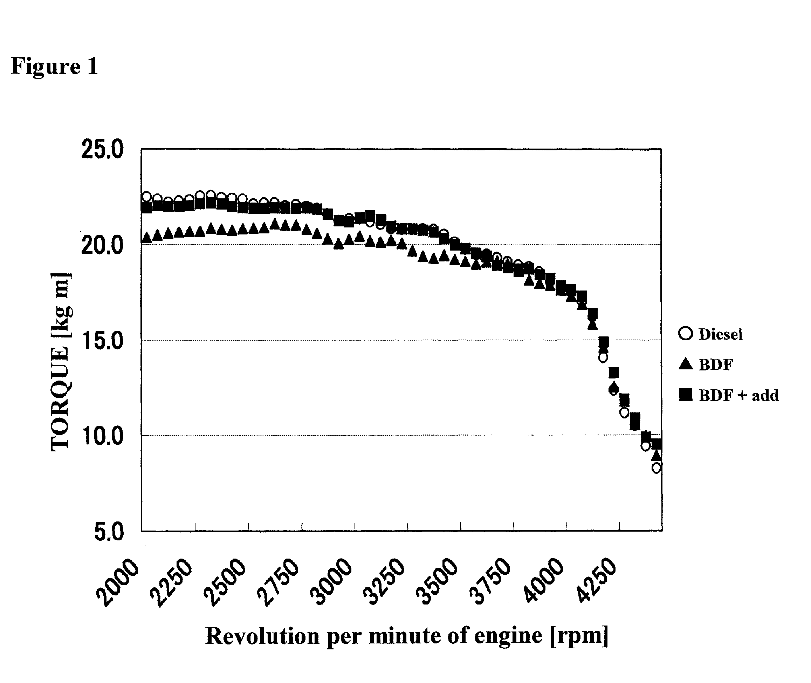

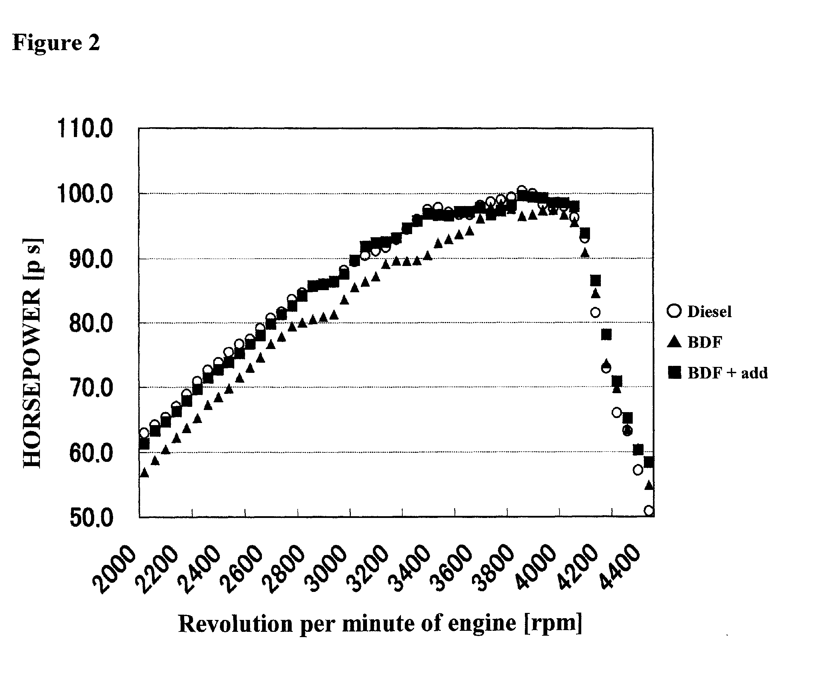

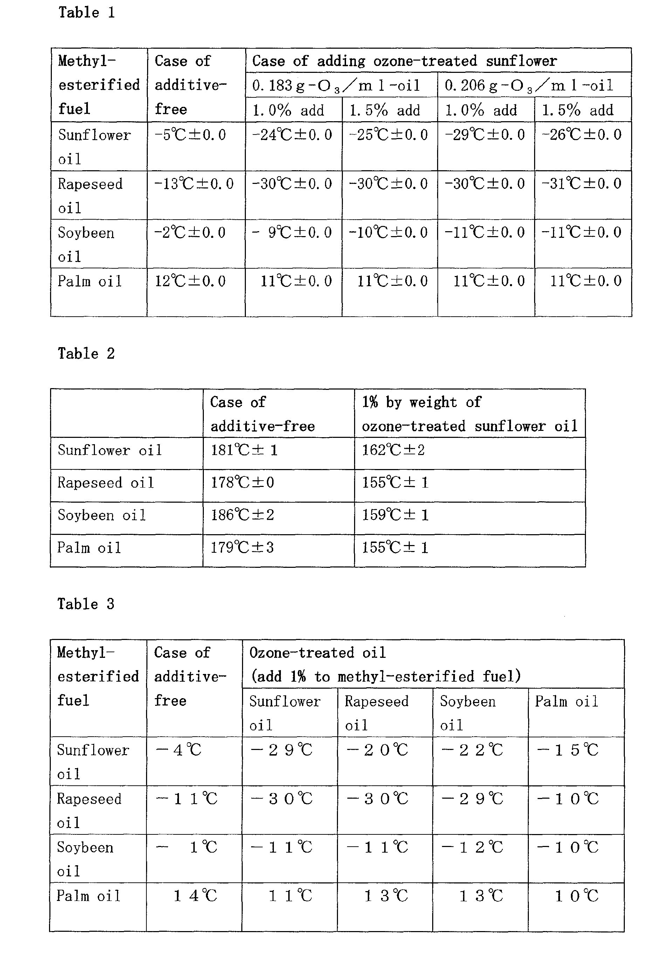

Next, each the fuel was put into the diesel vehicle, and the diesel vehicle was rapidly accelerated to about 150 km per hour on the chassis dynamo tester, and torque and horsepower at each of the revolutions per minute of an engine were measured. A measured result of the torque is shown in Fig. 1 and a measured result of the horsepower is shown in Fig. 2, respectively.

In Fig. 1, "diesel torque" shows torque measured values of the petroleum-based light oil and "BDF torque" shows torque measured values of the biodiesel fuel and "BDF+Add torque" shows torque measured values of the fuel in which the biodiesel fuel modifying agent is added to the biodiesel fuel, respectively. In Fig. 2, "horsepower" shows French horsepower (ps).

As shown in Figs. 1 and 2, it was found that the fuel (BDF+Add torque) in which the biodiesel fuel modifying agent was added obtained improvements in torque and horsepower at revolutions per minute of 2000 to 3600 rpm of the engine as compared with the self-made biodiesel fuel (BDF torque) . That is, the biodiesel fuel modifying agent according to the present invention was found to have action of improving torque and horsepower of the diesel engine.

Also, the fuel in which the biodiesel fuel modifying agent was added had equal torque and horsepower as compared with the petroleum-based light oil (diesel torque). This shows that the biodiesel fuel can be used as an alternative to the conventional petroleum-based light oil by using the biodiesel fuel modifying agent according to the present invention.

### [Industrial Applicability]

A biodiesel fuel modifying agent according to the present invention has a function of decreasing the pour point of biodiesel fuel by adding the pour point depressant to the biodiesel fuel. Therefore, even in regions in which temperature drops to -2°C (the pour point of methyl esterified fuel derived from soybean oil in the case that the pour point depressant according to the present invention is not added) or lower, the biodiesel fuel can be used, so that the pour point depressant has significant industrial applicability.

Use of biodiesel fuel can probably be advanced further in the future from the viewpoint of reduction in environmental problems such as air pollution. Therefore, the present invention is valuable in making the biodiesel fuel into more widespread use and can offer a lot of industrial applications.

The present invention opens up the possibility of using 100% biodiesel fuel for a diesel engine of car, train, etc. and has industrial applicability.

Since there is pour point depression action on mixed fuel with a high content of BDF such as B20, B50 which is currently becoming widespread, the present invention has significant industrial applicability.

In addition, the biodiesel fuel modifying agent according to the present invention improves engine performance of the diesel engine, particularly, torque and horsepower at revolutions of low speed, so that the biodiesel can be applied to large trucks etc.

### [Brief Description of the Drawings]

[Fig. 1] Fig. 1 is a graph showing torque measured values.
[Fig. 2] Fig. 2 is a graph showing horsepower measured values.

## Claims

1. A biodiesel fuel modifying agent obtained by ozone treatment of vegetable oil.

2. A biodiesel fuel modifying agent as claimed in claim 1, **characterized in that** the vegetable oil includes all other vegetable oils with a high degree of unsaturation in their structure.

3. A biodiesel fuel modifying agent **characterized in that** an unsaturated double bond region of triglyceride forms ozonide.

4. A biodiesel fuel modifying agent as claimed in any one of claims 1-3, **characterized by** decreasing a pour point of biodiesel fuel.

5. A biodiesel fuel modifying agent as claimed in any one of claims 1-4, **characterized by** improving torque of a diesel engine.

6. A biodiesel fuel modifying agent as claimed in any one of claims 1-5, **characterized by** improving horsepower of a diesel engine.

7. A biodiesel fuel modifying agent as claimed in any one of claims 1-6, **characterized by** being added to biodiesel fuel in which methyl esterification of vegetable oil is conducted.

8. Biodiesel fuel to which a biodiesel fuel modifying agent as claimed in any one of claims 1-7 is added.

9. Fuel for diesel engine containing at least petroleum-based light oil and/or biodiesel fuel and a biodiesel fuel modifying agent as claimed in any one of claims 1-7 as its composition.

10. A biodiesel fuel modifying agent production method **characterized by** ozone treatment of vegetable oil.

11. A method of improving torque of a diesel engine using a biodiesel fuel modifying agent as claimed in any one of claims 1-7.

12. A method of improving horsepower of a diesel engine using a biodiesel fuel modifying agent as claimed in any one of claims 1-7.
